# EUROPEAN PATENT SPECIFICATION

(11) **EP 1 976 781 B1**
(45) Date of publication and mention of the grant of the patent: **18.05.2011**
(21) Application number: 07702944.5
(22) Date of filing: 23.01.2007
(51) Int. Cl.: B65G 47/14, B29C 49/42

(54) **PREFORM UNSCRAMBLING AND ORIENTING APPARATUS**
VORRICHTUNG ZUM ORDNEN UND AUSRICHTEN VON VORFORMLINGEN
APPAREIL POUR ORIENTER ET DEMELER DES PREFORMES

(30) Priority: 26.01.2006 IT PR20060004
(43) Date of publication of application: 08.10.2008
(73) Proprietor: Lanfranchi S.R.L., 43044 Collecchio (Parma) (IT)
(72) Inventor: LANFRANCHI, Mario, I-43044 Collecchio (PR) (IT)
(74) Representative: Leone, Mario
(86) International application number: PCT/EP2007/000533
(87) International publication number: WO 2007/085409

(56) References cited:
- WO-A-2004/069700
- GB-A- 1 118 952

## Description

The present invention relates to an apparatus for unscrambling and orienting plastic bottle preforms, also known in the art as parisons, according to the preamble of claim 1.

The prior art is described in WO2004/069700, which discloses and provides a device for orienting bottle preforms that are designed to pass through a blow molding machine and thereby form plastic containers.

WO2004/069700 discloses an apparatus for unscrambling and orienting preforms according to the preamble of claim 1.

This apparatus is a movable inclined system having a plurality of pockets arranged along the periphery of the machine, each being adapted to receive one of the preforms loaded therein in bulk; by rotation of the movable system, each pocket carries the preform onto a first widened opening or slit, which is smaller than the diameter of the collar of the preform but large enough to allow the latter to rotate and take an upright position; then, the preform is moved into a second widened opening, or slit, larger than the former and than the collar diameter, so that such preform can freely slide below the movable system.

Below such system the apparatus has an inclined ramp for guiding the fallen preform and bring it to the blow molding machine.

Drawbacks are found in the prior art at the time of passage from the movable system to the inclined ramp, when the preform may at times not be perfectly aligned with the inclined ramp and at best come out of it or become stuck between such means and cause the whole blow molding line to jam.

The object of this invention is to obviate the above drawbacks by optimizing the preform exit area to avoid jamming, time delays and prevent the preforms from coming out of their pockets.

These objects and advantages are achieved by the unscrambling and orienting apparatus according to this invention, which is characterized by the annexed claim 1.

These and other features will be more apparent from the following description of a few embodiments, which are shown by way of example and without limitation in the accompanying drawings, in which:
- Figure 1 is a top view of a preform unscrambling and selecting machine,
- Figure 2 is a detail view of the exit area, designated by C, of Figure 1,
- Figure 3 shows an A-A section of the machine,
- Figure 4 shows a B-B section of the machine.

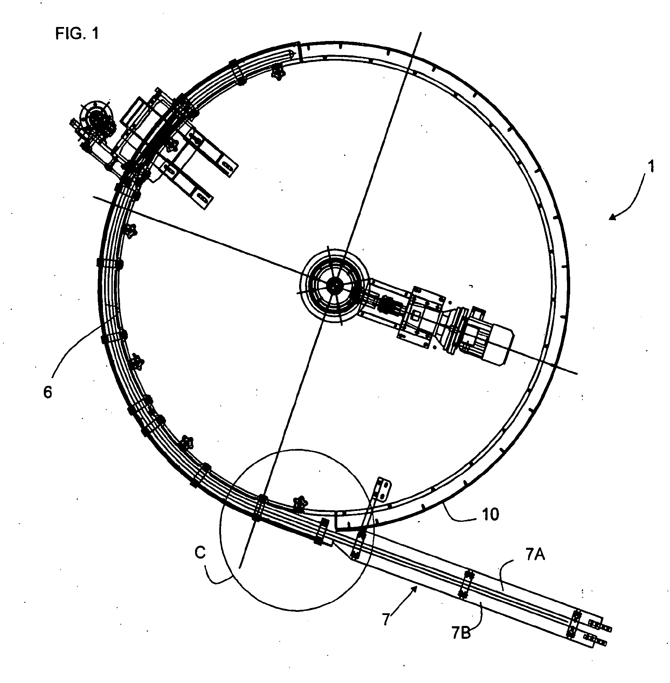

Referring to Figure 1, numeral 1 generally designates an apparatus 1 for unscrambling and orienting plastic preforms.

This apparatus 1, as is known in the above mentioned prior art, comprises a circular hopper (or container), designated by numeral 2, having a ring 3 therein, concentric with such hopper 2, with a series of indentations 4 adapted to define a plurality of pockets or housings 5, which are in turn adapted to contain one preform at a time in an essentially horizontal position.

Therefore, during rotation each housing 5 carries one preform.

The hopper is typically inclined so that bulk preforms lie in the bottom portion and, as they move into the housings 5, they are carried to an appropriate level by such housings 5.

This provides unscrambling of the preforms introduced in bulk in such apparatus 1, and orientation thereof, for arranging such preforms in an essentially upright position.

The preform from which the plastic container, generally a bottle, is to be formed has a cylindrical body, a collar of larger diameter than the body, and usually a neck with a screw thread corresponding to that of the final container (on which a sealing cap will be tightened).

An opening, or slit, designated by numeral 6, is also formed in the hopper, and extends along a circular arc underlying the line along which the preforms are driven by the ring 3.

Such slit 6 is wider than the diameter of the body of the preform but smaller than its collar, so that the preform can take an essentially upright position.

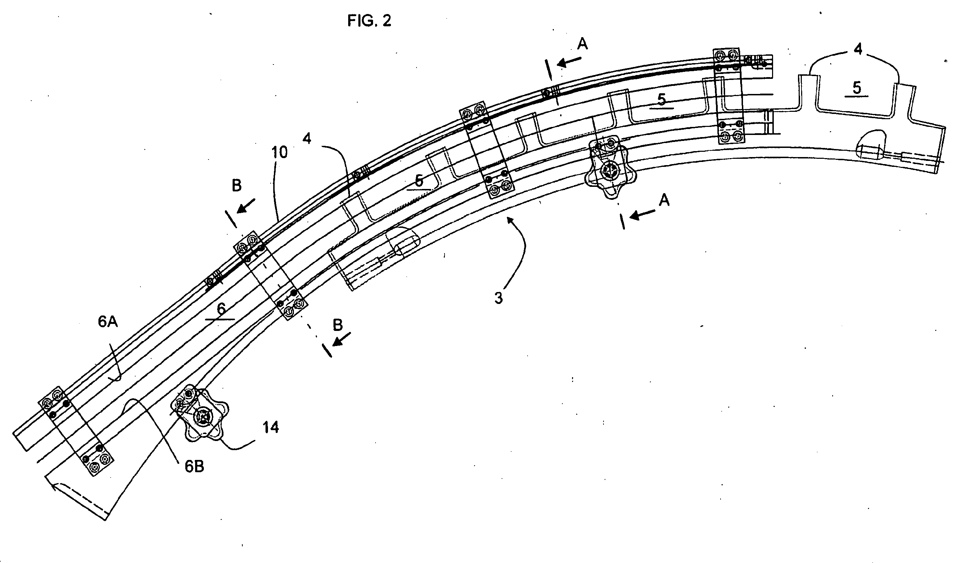

With further reference to Figure 2, in which the detail C of the end portion of the slit 6 is particularly shown, a preform exit conveyor 7 may be noticed.

Such conveyor 7 is placed at the end of the slit 6 at the same level as the perform exiting from the slit 6.

According to a first embodiment, the conveyor 7 is directly joined to the slit 6 so that the preform continues to follow its path onto such conveyor and the collar never falls out of its support guides whereas, in another embodiment, not shown, the conveyor 7 is separated from the slit 6 but at such a distance therefrom as to allow seamless passage of the preform from the slit 6 to the conveyor 7.

Preferably, the widths of the slit 6 and the conveyor 7 within which the body of the preform slides are substantially the same.

According to a further embodiment, not shown, a section is placed between the conveyor 7 and the slit 6 for joining them, which may have a straight or curvilinear shape.

In other words, the axis of the exit conveyor 7 or the intermediate section, if any, is tangent and coincident with the axis of the slit 6, such axis being defined by the center line across the slit 6.

The exit conveyor 7 is and extends tangent to the preform exit point and comprises preform collar support and guide members.

Also, this conveyor 7 is straight or formed of a plurality of straight and/or curvilinear sections.

Both the guides 6A, 6B of the slit 6 and the guides 7A and 7B of the conveyor 7 may be adjusted in height and width by format change adjustment means, allowing to process preforms having different diameters.

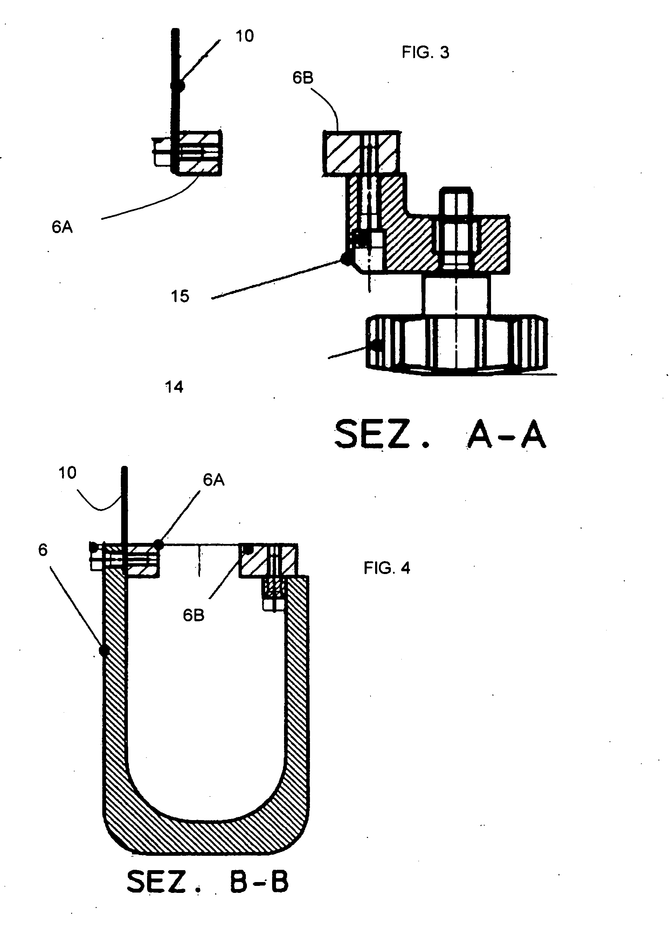

Such format change is shown in Figures 3 and 4, which depict the A-A and B-B sections of Figure 2 respectively and in which a knob 14 is shown to act on a bracket 15 connected to one of the guides 6B by one or more screws.

The other guide 6A is also connected to side wall 10 which delimits and retains the hopper.

The indentations 4 of the ring 3 preferably face the circular wall 10 of the hopper 2, to ensure that each preform is released from its housing 5 once it reaches the end portion of such housing.

## Claims

1. An apparatus (1) for unscrambling and orientating plastic preforms, said unscrambling being performed from an amount of preforms introduced in bulk in said apparatus (1), said orientating being designed to arrange such preforms in an essentially upright position, said preform comprising a collar of larger diameter than the body and said apparatus being of the type comprising a circular hopper (2), a ring (3) concentric with said hopper (2), with a series of indentations (4) adapted to define a plurality of pockets or housings (5), which are in turn adapted to contain one preform at a time in an essentially horizontal position; a slit extending along a circular arc underlying the line along which the preforms are driven by the ring (3), said slit being wider than the diameter of the body of the perform but smaller than its collar, so that the preform can take an essentially upright position; comprising a preform exit conveyor (7), **characterized in that** said slit (6) extends along a circular arc and said conveyor (7) is placed at the end of the slit (6) at the same level as the preform exits from the slit (6).

2. An apparatus (1) as claimed in claim 1, **characterized in that** the conveyor (7) is directly joined to the slit (6) so that the preform continues to follow its path onto such conveyor and the collar never falls out of its support guides.

3. An apparatus (1) as claimed in claim 1, **characterized in that** the conveyor (7) is separated from the slit but at such a distance therefrom as to allow seamless passage of the preform from the slit (6) to said conveyor (7).

4. An apparatus (1) as claimed in claim 1, **characterized in that** the indentations (4) of the ring (3) face the circular wall (10) of the hopper (2).

5. An apparatus as claimed in claim 1, **characterized in that** the widths of the slit (6) and the conveyor (7) within which the body of the preform slides are substantially the same.

6. An apparatus (1) as claimed in claim 1, **characterized in that** a section is placed between said conveyor (7) and said slit (6) for joining them (6, 7); said section having either straight or curvilinear shape.

7. An apparatus (1) as claimed in claim 1, **characterized in that** the exit conveyor (7) is and extends tangent to the preform exit point.

8. An apparatus (1) as claimed in claim 1, **characterized in that** the exit conveyor (7) comprises preform collar support and guide members.

9. An apparatus (1) as claimed in claim 1, **characterized in that** the conveyor (7) is straight or formed of a plurality of straight and/or curvilinear sections.

10. An apparatus (1) as claimed in claim 1, **characterized in that** both the guides of the slit (6) and of the conveyor (7) may be adjusted in height and width by format change adjustment means, allowing to process preforms having different diameters.

## Patentansprüche

1. Vorrichtung (1) fürs Wiederordnen-und Ausrichten von Vorformen aus Kunststoff, wobei das besagte Wiederordnen von einer Mehrheit von Vorformen ausgeführt ist, die lose in die besagte Vorrichtung eingesetzt werden, wobei die besagte Ausrichtung so ausgebildet ist, um die besagten Vorformen in einer im Wesentlichen stehenden Lage zu ordnen, wobei die besagten Vorformen einen Bund aufweisen, der einen größeren Durchmesser als der Körper hat, und wobei die besagte Vorrichtung von einer solchen Art hergestellt wird, dass sie einen kreisförmigen Trichter (2) und einen mit dem besagten Trichter (2) konzentrischen Ring (3) umfasst, wobei ein Satz Einschnitte (4) so angepasst sind, dass sie eine Mehrheit Taschen oder Gehäuse (5) definieren, die wiederum so angepasst sind, dass sie jedesmal nur eine Vorform in einer im Wesentlichen waagerechten Lage enthalten, wobei ein Schlitz sich längs einem kreisförmigen Bogen erstreckt, der unter der Linie längs deren die Vorformen von dem Ring (3) angetrieben werden gelegen ist, wobei der besagte Schlitz breiter als der Durchmesser des Körpers der Vorform aber kleiner als sein Bund ist, so dass die Vorform eine im Wesentlichen stehende Lage einnehmen kann; wobei sie einen Ausgangsförderer (7) der Vorformen umfasst, **dadurch gekennzeichnet, dass** der besagte Schlitz (6) sich längs einem kreisförmigen Bogen erstreckt, wobei der besagte Förderer am Ende des Schlitzes (6) am demselben Niveau gelegen ist, wie die aus dem Schlitz (6) austretenden Vorform.

2. Vorrichtung nach Anspruch 1, **dadurch gekennzeichnet, dass** der Förderer (7) unmittelbar mit dem Schlitz (6) verbunden ist, so dass die Vorform weiter ihren Pfad auf dem besagten Förderer verfolgt, und der Bund nie aus seinen Lagerführungen fällt.

3. Vorrichtung nach Anspruch 1, **dadurch gekennzeichnet, dass** der Förderer (7) getrennt vom Schlitz ist aber einen solchen Abstand davon aufweist, dass er einen kontinuierlichen Durchfluss der Vorformen aus dem Schlitz (6) bis zum besagten Förderer gestattet.

4. Vorrichtung nach Anspruch 1, **dadurch gekennzeichnet, dass** die Einschnitte (4) des Ringes (3) der kreisförmigen Wandung (10) des Trichters (2) zugewandt sind.

5. Vorrichtung nach Anspruch 1, **dadurch gekennzeichnet, dass** die Breiten des Schlitzes (6) und des Förderers, in den der Körper der Vorform gleitet, sind im Wesentlichen die selben.

6. Vorrichtung nach Anspruch 1, **dadurch gekennzeichnet, dass** ein Abschnitt zwischen dem besagten Förderer (7) und dem besagten Schlitz (6) gelegen ist, um sie (6, 7) zu verbinden; wobei der besagte Abschnitt entweder eine gerade oder kurvenförmige Gestalt hat.

7. Vorrichtung nach Anspruch 1, **dadurch gekennzeichnet, dass** der Ausgangsförderer (7) sich tangential zum Ausgangspunkt der Vorform erstreckt.

8. Vorrichtung nach Anspruch 1, **dadurch gekennzeichnet, dass** der Ausgangsförderer (7) eine Lagerung des Bundes der Vorform und Führungsmittel aufweist.

9. Vorrichtung nach Anspruch 1, **dadurch gekennzeichnet, dass** der Förderer (7) eine gerade Gestalt hat oder eine Mehrheit von geraden und/oder kurvenförmigen Abschnitten aufweist.

10. Vorrichtung nach Anspruch 1, **dadurch gekennzeichnet, dass** sowohl die Führungen des Schlitzes (6) als die des Förderers (7) in der Höhe und Breite mittels Formveränderungsregelmittel geregelt werden können, um so Vorformen mit verschiedenen Durchmessern behandeln zu können.

## Revendications

1. Un appareil pour ranger et orienter des préformes en plastique, le dit rangement étant fait par une quantité de préformes introduites en bloc dans le dit appareil (1), la dite orientation étant prévue pour disposer les dites préformes dans une position essentiellement droite, la dite préforme comprenant un collier avec un diamètre supérieur a ceux du corps et le dit appareil étant du type comprenant une trémie circulaire (2), un anneau (3) concentrique avec la dite trémie (2), avec une série d'entailles (4) adaptés pour définir une pluralité de poches ou enveloppes (5), qui à fois sont adaptés pour contenir une seule préforme à la fois dans une position essentiellement horizontale ; une fente s'étendant long un arc circulaire soulignant la ligne long la quelle les préformes sont entraînées par l'anneau (3), la dite fente étant plus large du diamètre du corps de la préforme mais plus petite que son collier, en manière que la préforme peut prendre une position essentiellement droite ; comprenant un convoyeur (7) de sortie des préformes, **caractérisé en ce que** la dite fente (6) s'étend long un arc circulaire et le dit convoyeur (7) est placé à l'extrémité de la fente (6) au même niveau de la préforme quand elle sort de la fente (6).

2. Appareil (1) selon la revendication 1, **caractérisé en ce que** le convoyeur (7) est directement réuni avec la fente (6) en manière que la préforme continue à suivre son parcours sur tel convoyeur et le collier ne tombe jamais hors de ses guides de support.

3. Appareil (1) selon la revendication 1, **caractérisé en ce que** le convoyeur (7) est séparé de la fente mais à une distance d'elle, pour permettre un passage continu de la préforme de la fente (6) au dit convoyeur (7).

4. Appareil (1) selon la revendication 1, **caractérisé en ce que** les entailles (4) de l'anneau (3) sont en face de la paroi circulaire (10) de la trémie (2).

5. Appareil (1) selon la revendication 1, **caractérisé en ce que** les largeurs de la fente (6) et le convoyeur (7) à l'intérieur duquel glisse le corps de la préforme, sont substantiellement les mêmes.

6. Appareil (1) selon la revendication 1, **caractérisé en ce qu'**une section est placée entre le dit convoyeur (7) et la dite fente (6) pour les réunir (6, 7) ; la dite section ayant une forme droite ou curviligne.

7. Appareil (1) selon la revendication 1, **caractérisé en ce que** le convoyeur de sortie (7) est et s'étend tangent au point de sortie de la préforme.

8. Appareil (1) selon la revendication 1, **caractérisé en ce que** le convoyeur de sortie (7) comprend des moyens de guide et support d'un collier de préforme.

9. Appareil (1) selon la revendication 1, **caractérisé en ce que** le convoyeur (7) est droit ou formée par une pluralité de sections droites et/ou curvilignes.

10. Appareil (1) selon la revendication 1, **caractérisé en ce que** soit les guides de la fente (6) que celles du convoyeur (7) peuvent être réglées en hauteur et largeur par des moyens de réglage pour variation de forme, en manière de permettre de traiter des préformes ayant des diamètres différents.
